**Europäisches Patentamt**

**European Patent Office**

**Office européen des brevets**

(11) Veröffentlichungsnummer: **0 267 419**

**A2**

# (12) EUROPÄISCHE PATENTANMELDUNG

(21) Anmeldenummer: **87114437.4**

(22) Anmeldetag: **02.10.87**

(51) Int. Cl.4: **F16H 1/44 , B60K 23/04**

(30) Priorität: **08.11.86 DE 3638232**

(43) Veröffentlichungstag der Anmeldung:
**18.05.88 Patentblatt 88/20**

(84) Benannte Vertragsstaaten:
**AT DE FR GB**

(71) Anmelder: **ROBERT BOSCH GMBH**
**Postfach 50**
**D-7000 Stuttgart 1(DE)**

(72) Erfinder: **Meier, Wolfgang**
**Beethovenstrasse 14**
**D-7132 Illingen(DE)**
Erfinder: **Meurer, Martin, Dipl.-Ing.**
**Schönblickstrasse 105**
**D-7253 Renningen(DE)**
Erfinder: **Sigl, Alfred, Dipl.-Ing.**
**Waldeckstrasse 8**
**D-7126 Sersheim(DE)**

(54) **Differentialsperre für Ausgleichsgetriebe.**

(57) Es wird eine Differentialsperre für Ausgleichsgetriebe (1) vorgeschlagen, die aus an den Abtriebswellen (2, 3) des Ausgleichsgetriebes (1) angeordneten hydraulischen Antriebseinheiten (4, 5) besteht.
Die Antriebseinheiten (4, 5) sind über hydraulische
Leitungen (8, 9) gekoppelt, so daß bei gesperrtem
Ventil (12) eine maximale Sperrwirkung zwischen
den Antriebseinheiten (4, 5) gegeben ist.

*FIG. 1*

EP 0 267 419 A2

## Differentialsperre für Ausgleichsgetriebe

Stand der Technik

Die Erfindung betrifft eine Differentialsperre für Ausgleichsgetriebe nach dem Oberbegriff des Anspruchs 1.

Bauartbedingt sind an den Abtriebswellen von Ausgleichsgetrieben die Abtriebsmomente gleich groß und zwar gleich dem niedrigsten Moment. Sind nun die Reibwerte zwischen Rädern und Fahrbahn unterschiedlich groß, so kann es im Extremfall zum Stillstand des einen und zum Durchdrehen des anderen Rades kommen. Um dies zu verhindern werden Differentialsperren verwendet. Aus der US-PS 4,116,090 ist eine Differentialsperre bekannt, bei der die Abtriebswellen außerhalb des Ausgleichsgetriebes starr miteinander gekoppelt werden könne. Dieses Prinzip ist jedoch für Fahrzeuge mit lenkbaren Antriebsrädern ungeeignet. Auch läßt sich die Sperrwirkung, die in diesem Fall 100 % beträgt nicht regeln.

Es besteht die Möglichkeit, daß die Abtriebswelle mit höherer Drehzahl abgebremst wird, wodurch an der stillstehenden Welle ein Abriebsmoment eingeleitet wird, welches gleich dem zum Abbremsen aufgebrachten Moment ist. Die zum Abbremsen erforderliche Bremsenergie geht als Wärmeverlustleistung verloren. Außerdem treten bei Fahrzeugen mit lenkbarer Antriebsachse in Kurven unkomfortable Lenkradreaktionen und erhöhte Lenkkräfte auf.

Vorteile der Erfindung

Eine Differentialsperre der eingangs genannten Gattung mit den kennzeichnenden Merkmalen des Hauptanspruchs hat demgegenüber den Vorteil, daß durch die Verwendung der hydraulischen oder elektrischen Antriebseinheiten es möglich ist, das Drehmoment des durchdrehenden Rades als Antriebsmoment für das stillstehende Rad zu nutzen. Dabei arbeitet die Antriebseinheit des durchdrehenden Rades als Pumpe bzw. Generator. Von der als Pumpe arbeitenden Antriebseinheit wird die als Motor arbeitende Antriebseinheit des stillstehenden Rades angetrieben, die dann ein Moment an die stillstehende Abtriebswelle abgibt. Zusätzlich wird noch ein Moment über das Ausgleichsgetriebe in die stillstehende Abtriebswelle eingeleitet, welches bauartbedingt gleich groß dem zum Betrieb der Pumpe benötigten Moment ist. Durch Regelung der hydraulischen bzw. elektrischen Kopplung zwischen den Antriebseinheiten, läßt sich die Momentübertragung in der Größe variieren und den jeweiligen Fahrbedingungen anpassen. Bei Fahrzeugen mit Servolenkung kann den erhöhten Lenkkräften und unkomfortablen Lenkradreaktionen während des Sperrbetriebes durch stärkere Lenkunterstützung oder Dämpfung mittels des erzeugten Druckes entgegengewirkt werden.

Bei der erfindungsgemäßen Differentialsperre sind die Verluste deutlich geringer als bei bekannten Sperrprinzipien, wo Antriebsenergie über Reibung vernichtet wird. Hier wird dagegen abhängig vom Wirkungsgrad der verwendeten Antriebseinheiten die Bremsenergie einer Antriebseinheit der anderen Antriebseinheit als Nutzenergie zugeführt.

Die erfindungsgemäße Differentialsperre ist nicht nur für Einachsantrieb, Frontantrieb sondern beispielsweise auch für Allradantrieb in vorteilhafter Weise einsetzbar.

Zeichnung

Die Erfindung wird nachfolgend anhand der Zeichnung näher erläutert. Es zeigen:

Figur 1 ein Ausgleichsgetriebe mit Differentialsperre, die nicht selbstansaugende Antriebseinheiten besitzt und

Figur 2 ein Ausgleichsgetriebe mit Differentialsperre, die selbstansaugende Antriebseinheiten besitzt.

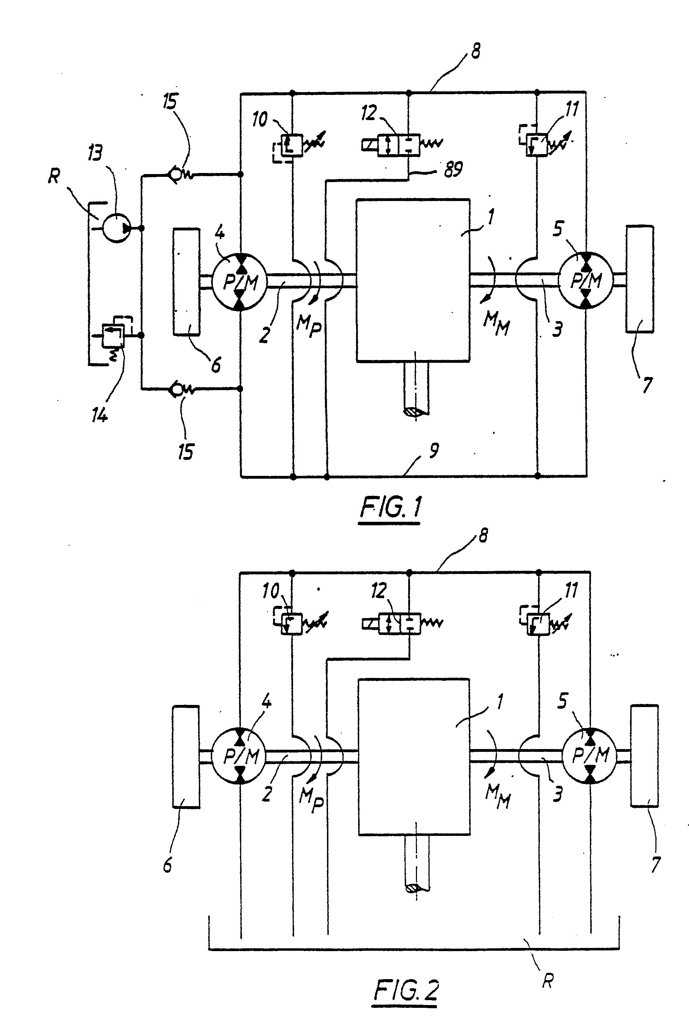

Bei der in Figur 1 dargestellten Ausführungsform ist ein Ausgleichsgetriebe 1 mit Abtriebswellen 2, 3 verwendet. Die Abtriebswellen 2, 3 treiben als hydraulische Pumpen und hydraulische Motoren arbeitende Antriebseinheiten 4, 5 sowie Räder 6, 7 an. Über hydraulische Leitungen 8, 9 ist die linke Antriebseinheit 4 mit der rechten Antriebseinheit 5 gekoppelt. Zur Begrenzung des Momentes und zur Regelung der Sperrwirkung sind Druckbegrenzungsventile 10, 11 vorgesehen. Ein elektromagnetisches Ventil 12 kann die Wechselwirkung zwischen den Antriebseinheiten 4, 5 ein-oder ausschalten. Wird das Ventil 12 geöffnet, so findet über die zugehörige hydraulische Leitung 89 ein Druckausgleich zwischen den Leitungen 8 und 9 statt, so daß keine Sperrwirkung auftritt. Befindet sich das Ventil 12 dagegen in der heir dargestellten gesperrten Stellung, so kann zwischen den Antriebseinheiten 4, 5 die maximale Sperrwirkung wirksam werden.

Zur Versorgung mit Hydraulikflüssigkeit dient eine Speisepumpe 13, die mit einem Reservoir R in Verbindung steht. Im Kreislauf der Speisepumpe 13 ist ein Druckbegrenzungsventil 14 eingeschaltet. Zum Aufrechterhalten des Drucks wird der Kreislauf der Antriebseinheiten 4 und 5 durch zwei Rückschlagventile 15 vom Kreislauf der Speisepumpe getrennt.

Kommt es infolge schlechter Fahrbahnbedingungen zum Durchdrehen z. B. des linken Rades 6 und zum Stillstand des rechten Rades 7, so arbeitet die Antriebseinheit 4 als Pumpe. Dadurch wird über die hydraulischen Leitungen 8 und 9 die als Motor arbeitende Antriebseinheit 5 angetrieben. Diese gibt das Drehmoment über die Abtriebswelle 3 an das stehende Rad 7 ab. Zum Betrieb der als Pumpe arbeitenden Antriebseinheit 4 muß vom Ausgleichsgetriebe ein Moment M aufgebracht werden. Rückwirkend wird dadurch im Ausgleichsgetriebe ein Moment M erzeugt, welches in die rechte Abtriebswelle eingeleitet wird und so das rechte Rad unterstützt. Mit Hilfe des Ventils 12 läßt sich dieser Vorgang einleiten und zusätzlich mit den Druckbegrenzungsventilen 10 und 11 regeln. Die Stärke der Sperrwirkung läßt sich hiermit an die Fahrbahnbedingungen anpassen.

Bei der Anordnung in Figur 2 ist der Aufbau im wesentlichen gleich, aufgrund der selbstansaugenden Antriebseinheiten kann jedoch auf die Speisepumpe 13 mit zugehörigem Druckbegrenzungsventil 14 und Rückschlagventil 15 verzichtet werden.

**Ansprüche**

1. Differentialsperre für Ausgleichsgetriebe in Kraftfahrzeugen, die an den Abtriebswellen des Ausgleichsgetriebes wirksam ist, dadurch gekennzeichnet, daß hydraulische bzw. elektrische Antriebseinheiten (4, 5) den Abtriebswellen (2, 3) zugeordnet sind, die hydraulisch bzw. elektrisch gekoppelt sind, die Differentialsperre bilden; und daß die Antriebseinheiten (4, 5) abhängig von der Drehzahldifferenz zwischen Drehzahl einer Abtriebswelle (2) und der Drehzahl der anderen Abtriebswelle (3) wechselseitig als Pumpe oder Motor bzw. Generator oder Motor arbeiten.

2. Differentialsperre nach Anspruch 1, dadurch gekennzeichnet, daß jeweils eine hydraulische Antriebseinheit (4, 5) mit einer Abtriebswelle (2, 3) des Ausgleichsgetriebes (1) gekoppelt ist; daß beide Antriebseinheiten (4, 5) über hydraulische Leitungen (8, 9) miteinander gekoppelt sind; und daß die Sperrwirkung zwischen den beiden Antriebseinheiten (4, 5) über ein Ventil (12) manuell oder automatisch einschaltbar ist.

3. Differentialsperre nach einem der Ansprüche 1 oder 2, dadurch gekennzeichnet, daß bei beiden Antriebseinheiten (4, 5) Druckbegrenzungsventile (10, 11) zur Einstellung des maximalen Sperrmoments vorhanden sind.

4. Differentialsperre nach Anspruch 1, dadurch gekennzeichnet, daß jeweils eine elektrische Antriebseinheit mit einer Abtriebswelle des Ausgleichsgetriebes gekoppelt ist; daß beide Antriebseinheiten über elektrische Leitungen miteinander gekoppelt sind; und daß die Sperrwirkung zwischen beiden Antriebseinheiten über einen Schalter manuell oder automatisch einschaltbar ist.

5. Differentialsperre nach Anspruch 4, dadurch gekennzeichnet, daß bei beiden Antriebseinheiten elektrische Schaltungen zur Einstellung des maximalen Sperrmoments vorhanden sind.

*FIG.1*

*FIG.2*

0 267 419